# EUROPÄISCHE PATENTANMELDUNG

(11) **EP 2 886 080 A1**
(43) Veröffentlichungstag der Anmeldung: **24.06.2015**
(21) Anmeldenummer: 13199130.9
(22) Anmeldetag: 20.12.2013
(51) Int. Cl.: A61C 13/20, F27B 17/02

(54) **Verfahren zum Verarbeiten eines Dentalmaterials, Regeleinrichtung für einen Dentalofen und Dentalofen**

(71) Anmelder: Ivoclar Vivadent AG, 9494 Schaan (LI)
(72) Erfinder: Jussel, Rudolf, 6805 Feldkirch-Gisingen (AT)
(74) Vertreter: Baronetzky, Klaus

(57) **Zusammenfassung**

Die Erfindung betrifft ein Verfahren zum Verarbeiten, insbesondere Pressen und Härten, eines Dentalmaterials (28) mittels
- eines Formeinsatzes (30), der einen Vorpressraum (22) aufweist, an welchen sich ein Formraum (14, 16) anschließt, wobei der Vorpressraum (22) zum Aufnehmen des Dentalmaterials (28) ausgebildet ist, und
- eines Pressofens mit einer Brennkammer (10) zum Aufnehmen des Formeinsatzes (30).

Das Verfahren umfasst die Schritte:
- Einbringen des Dentalmaterials (28) in den Vorpressraum (22);
- Erwärmen der Brennkammer (10), in welcher sich der Formeinsatz (30) befindet, auf eine erste Temperatur;
- Pressen des Dentalmaterials (28) mit einem Pressstempel (26) in den Formraum (14, 16) mittels Aufbringen einer Kraft auf den Pressstempel (26), in einem ersten Prozessabschnitt, wobei der Pressstempel (26) bewegt wird und die Pressstempelgeschwindigkeit in Abhängigkeit von der Zeit als ein Geschwindigkeitsprofil erfasst wird; und
- Einstellen, insbesondere Abkühlen der Brennkammer (10) auf eine zweite Temperatur, in einem zweiten Prozessabschnitt, ab einem Zeitpunkt an dem eine Übereinstimmung des erfassten Geschwindigkeitsprofils mit einem ersten Geschwindigkeitsprofil festgestellt wird, ohne dass die auf den Pressstempel (26) aufgebracht Kraft verringert wird.

## Beschreibung

Die Erfindung betrifft ein Verfahren zum Verarbeiten eines Dentalmaterials, sowie ein Dentalofen mit Regeleinrichtung gemäß dem Oberbegriff von Anspruch 1.

Bei Verfahren der eingangs genannten Art werden üblicherweise in Muffeln angeordnete Formeinsätze verwendet, die einen dem gewünschten Dentalobjekt, beispielsweise einem Dentalrestaurationsteil, entsprechenden Formraum aufweisen. An den Formraum schließt sich ein Vorpressraum an, in den ein Pressstempel eingeführt wird, nachdem das zur Herstellung des Dentalobjekts benötigte Dentalmaterial in den Vorpressraum eingebacht wurde. Durch Wärmeeinwirkung wird das Dentalmaterial erwärmt, geschmolzen und durch den Pressstempel in den Formraum gepresst.

Über zahlreiche Versuche wurde festgestellt, dass trotz der exakt gleicher Wärmezufuhrbedingungen, gleicher Presszeiten und gleicher Dentalmaterialien Unterschiede zu beobachten sind, die auch kritische Qualitätseinbußen mit sich bringen können. Offenbar tragen die unterschiedlichen Einbettmassen-Materialien aufgrund unterschiedlicher Wärmekapazitäten bzw. -massen und Wärmeleitung zu den beobachteten Abweichungen bei.

Bei den bekannten Verfahren wird eine Haltezeit bis Pressbeginn vorgegeben, welche schätzungsweise dazu ausreicht, das Dentalmaterial, unter Zufuhr von Wärme, in den Formraum pressfähig einzubringen. Hierbei kann es jedoch problematisch sein, wenn das Dentalmaterial aufgrund fertigungsbedingter Toleranzen bezüglich seinen Eigenschaften und Parametern schwankt. So können die Viskositätseigenschaften eines Rohlings von Charge zu Charge unterschiedlich sein und auch die Position des Rohlings oder Dentalmaterials im Ofen während des Herstellprozesses kann das Ergebnis der Verfahren erheblich beeinflussen.

Auf das Dentalmaterial nicht vollständig abgestimmte Prozessparameter können zu fehlerhaften Ergebnissen führen, beispielsweise zu Farbfehlern oder sogar zu einem Nicht- Auspressen des Dentalobjekts, wobei letzteres gleichbedeutend ist mit einem Verlust der zahntechnischen Arbeit.

Verbesserte Verfahren für die Steuerung eines dentalen Brennprozesses sind aus der EP 1 915 972 B1 und der DE 10 2008 012 578 B4 bekannt.

Der Erfindung liegt demgegenüber die Aufgabe zugrunde, ein Verfahren gemäß dem Oberbegriff von Anspruch 1 einer verbesserten Koordinierung der Prozessparameter beim Verarbeiten eines Dentalmaterials zu einem Dentalobjekt, wie beispielsweise Zahnersatz oder Zahnteilersatz, bereitzustellen, im Hinblick einer Verbesserung der Verarbeitungsergebnisse des Dentalmaterials.

Diese Aufgabe wird durch die unabhängigen Ansprüche gelöst. Vorteilhafte Ausgestaltungen und Weiterbildungen ergeben sich aus den Unteransprüchen. Die Merkmale der Weiterbildungen können, soweit technisch sinnvoll, miteinander kombiniert werden.

Ein Aspekt der Erfindung betrifft ein Verfahren zum Verarbeiten, insbesondere Pressen, eines Dentalmaterials. Für die Verarbeitung können ein Formeinsatz und ein Pressofen mit einer Brennkammer verwendet werden. Der Formeinsatz kann einen Vorpressraum aufweisen, an welchen sich ein Formraum anschließt, so dass der Vorpressraum und der Formraum miteinander verbunden, vorzugsweise fluidverbunden, sind. Vorliegend wird als "Fluid" ein fließtauglicher Stoff bezeichnet, beispielsweise ein viskoser oder ein fester, in Randbereichen angeschmolzener Stoff.

In dem Vorpressraum ist das Dentalmaterial aufnehmbar und in der Brennkammer des Pressofens ist der Formeinsatz oder die Muffel aufnehmbar.

Das Verfahren kann die Schritte umfassen:
a) Einbringen des Dentalmaterials in den Vorpressraum;
b) Erwärmen der Brennkammer, in welcher sich der Formeinsatz befindet, auf eine erste Temperatur;
c) Pressen des Dentalmaterials mit einem Pressstempel in den Formraum, in einem ersten Prozessabschnitt, in dem der Pressstempel bewegt wird und die Pressstempelgeschwindigkeit in Abhängigkeit von der Zeit als ein Geschwindigkeitsprofil erfasst wird; und
d) Einstellen, insbesondere Abkühlen der Brennkammer auf eine zweite Temperatur, in einem zweiten Prozessabschnitt, ab einem Zeitpunkt, an dem eine Übereinstimmung des erfassten Geschwindigkeitsprofils mit einem ersten Geschwindigkeitsprofil festgestellt wird.

Die genannten Schritte können nacheinander in der aufgeführten Reihenfolge, oder in einer anderen Reihenfolge ausgeführt werden. Die Schritte können auch gleichzeitig oder sich überschneidend ausgeführt werden. So können beispielsweise
- die Schritte a) und b) gleichzeitig ausgeführt werden, oder
- die Schritte b) und c) können sich überschneiden, so dass der Schritt c) "Pressen des Dentalmaterials" im Verlauf der Ausführung des Schritts b) "Erwärmen der Brennkammer" gestartet wird.

Ein zeitabhängiger Geschwindigkeitsverlauf des Pressstempels, vorliegend als Pressstempelgeschwindigkeit bezeichnet, kann zweidimensional (2D) in einem kartesischen Koordinatensystem dargestellt sein, in dem auf einer Abszissenachse die Zeit und auf einer Ordinatenachse die Pressstempelgeschwindigkeit aufgetragen sind.

Anstelle des zeitabhängigen Geschwindigkeitsverlaufs kann auch kurzerhand der Weg des Pressstempels erfasst werden und für die Auswertung herangezogen werden. Die Pressstempelbewegung lässt sich in an sich bekannter Weise erfassen, sie es mit einem Positionssensor für den aktuellen Ort, an dem sich der Pressstempel befindet, oder bei einem Schrittmotorantrieb des Pressstempels über die Erfassung der Anzahl der zurückgelegten Schritte des Schrittmotors.

Ein Geschwindigkeitsprofil kann als ein 2D-Profil der Pressstempelgeschwindigkeit aufgefasst werden, wobei zwei Profile dann als übereinstimmend angesehen werden können, wenn die Profile ähnlich sind mit einer maximalen Abweichung unterhalb des vorgegebenen Toleranzwerts.

Ein Geschwindigkeitsprofil kann auch als ein Merkmal eines 2D-Profils der Pressstempelgeschwindigkeit aufgefasst werden, wobei das Merkmal als eine Abfrage definiert ist. Ein solches Merkmal kann beispielsweise eine Abfrage sein, ob
- der Wert der Pressstempelgeschwindigkeit gegenüber einem Schwellwert größer oder kleiner ist, oder
- eine Steigung der Pressstempelgeschwindigkeit, die eine
Pressstempelbeschleunigung ist, gegenüber einem Schwellwert größer oder kleiner ist.

Dementsprechend können zwei Geschwindigkeitsprofile dann als übereinstimmend angesehen werden, wenn die Abfrage für eine erfasste Pressstempelgeschwindigkeit zu einem Zeitpunkt erstmalig als erfüllt gilt.

Alternativ kann auch das Integral über das Geschwindigkeitsprofil erfasst werden und für die Auswertung herangezogen werden.

Bei Beobachtung von Geschwindigkeitsprofilen und Feststellung der Übereinstimmung ist es auch möglich, auf den Zeitpunkt der Änderung der Geschwindigkeit abzustellen, also die insgesamt verstrichene Zeit; die von der Auswertung her insofern dem Integral über die Geschwindigkeit entspricht; als Kriterium heranzuziehen.

Das Erwärmen oder Abkühlen der Brennkammer auf eine End-Temperatur in den Schritten b), d) kann so ausgeführt werden, dass von den drei Parametern
*Temperaturänderungsrate, Ausführungszeit, End-Temperatur,*
zwei Parameter eingestellt werden, wobei der dritte Parameter sich aus den eingestellten Werten ergibt. Die gewünschten Einstellungen können vorzugsweise an dem Pressofen eingegeben oder festgelegt werden.

So können beispielsweise eine Temperaturänderungsrate zum Erwärmen oder Abkühlen, sowie eine entsprechende Ausführungszeit, eingestellt werden. Die erzielte End-Temperatur ergibt sich aus den eingestellten Werten für die Temperaturänderungsrate und Ausführungszeit.

Vorteilhafterweise ermöglicht das Verfahren eine Verkürzung der Zykluszeit. Das Pressen des Dentalmaterials in einem ersten Prozessabschnitt bei einer ersten Ofen-Temperatur, die höher ist als eine für die Verarbeitung des Dentalmaterials gewünschte und benötigte, zweite Temperatur, ermöglicht eine gegenüber dem üblichen Vorgehen, bei welchem der Ofen von Anfang an auf die benötigte Temperatur aufgeheizt wird, erhöhte Wärmezufuhr in die Muffel. Dadurch wird die Erwärmung des Dentalmaterials im Inneren der Muffel auf die gewünschte und benötigte, zweite Temperatur erheblich beschleunigt.

Der Ofen kann, beispielsweise wenn die Temperatur des Dentalmaterials im Inneren der Muffel den gewünschten Wert erreicht hat, abgekühlt werden, beispielsweise auf die Zieltemperatur des Dentalmaterials.

Anstelle dessen kann auch lediglich die Heizleistung reduziert werden, um die Temperaturänderung im Rohling zu reduzieren. Durch eine geringere Aufheizgeschwindigkeit wird auch der Temperaturgradient der Muffel verringert.

Doch ebenso wichtig wie die Verkürzung der Zykluszeit ist die Vermeidung einer überhöhten Temperatur des Dentalmaterials im Inneren der Muffel durch die Aufheizung der Brennkammer auf eine überhöhte Temperatur. Eine Temperaturüberhöhung im Inneren der Muffel über einen längeren Zeitraum kann zu unerwünschten Farb- und/oder Strukturänderungen des Dentalmaterials führen.

Hierbei kann eine Regelung der Ofentemperatur nach einem vorgegebenen Zeitplan entweder zu einem unvollständigen Ergebnis führen, bei welchem das Dentalmaterial infolge Temperaturüberhöhung nicht ausreichend aufgewärmt ist, oder die Regelung schießt über das Ziel hinaus, weil der Ofen zu lange auf der überhöhten Temperatur beheizt wird, so dass eine anhaltende Temperaturüberhöhung im Inneren der Muffel das Dentalmaterial beschädigt.

Das Ausführen einer Temperaturmessung im Inneren der Muffel zur Lösung des geschilderten Problems würde allerdings einen hohen technischen und finanziellen Aufwand erfordern.

Gemäß dem vorliegenden Verfahren kann die Brennkammer ab einem Zeitpunkt abgekühlt werden, an dem eine Übereinstimmung des erfassten Geschwindigkeitsprofils mit einem ersten Geschwindigkeitsprofil festgestellt wird. Damit erübrigt sich eine aufwändige Temperaturmessung, die Zykluszeit ist gegenüber bislang bekannten Verfahren verkürzt, und das Ergebnis ist weder unvollständig, noch über das Ziel hinausgeschossen. Das Problem wird effizient und mit nur geringem Aufwand gelöst.

Ein weiterer Aspekt der Erfindung betrifft eine Regeleinrichtung für einen Dentalofen, insbesondere einen Pressofen insbesondere als Teil dieses Dentalofens. Die Regeleinrichtung kann dazu ausgebildet sein, Parameter des Dentalofens einschließlich Temperatur, Kraft auf den Pressstempel und Parameter der Pressstempelbewegung zu regeln, entsprechend dem geschilderten Verfahren oder einer seiner nachfolgend beschriebenen, vorteilhaften Ausführungen.

Gemäß einer Ausführungsform kann eine Übereinstimmung mit dem ersten Geschwindigkeitsprofil beim Überschreiten eines Schwellwerts durch die Pressstempelgeschwindigkeit festgestellt werden. Eine Übereinstimmung mit dem ersten Geschwindigkeitsprofil kann auch dann festgestellt werden, wenn eine Pressstempelbeschleunigung einen Schwellwert überschreitet.

Gemäß einer weiteren Ausführungsform wird folgendes Verfahren angewendet:
Es wird eine Presskraft auf den noch harten, also insofern nicht fließfähigen Rohling aufgebracht. Der Antrieb des Pressstempels wird arretiert. Aufgrund der Elastizität des Antriebs und des Gesamtsystems in vertikaler Richtung wirkt die Kraft kontinuierlich auch den Rohling, und wenn dieser weich wird, nimmt die Kraft ab, während sich der Rohing gleichzeitig in die Presskanäle hinein zu bewegen beginnt.

Ein Kraftsensor, der auf über die Erfassung des Antriebstroms des Pressstempelantriebs realisiert sein kann, oder ein Wegsensor kann erfindungsgemäß den Beginn des Weichwerdens des Rohlings erfassen und so den optimalen Zeitpunkt für den Verformungsbeginn festlegen.

Mit überraschend einfachen Mitteln lässt sich insofern erfindungsgemäß der optimale Zeitpunkt für den Beginn des Auspressens gleichsam automatisch wählen.

In diesen Fällen wird ein Merkmal des 2D-Profils der Pressstempelgeschwindigkeit als ein erstes Geschwindigkeitsprofil aufgefasst, wobei das Merkmal als eine Abfrage definiert ist.

Eine Übereinstimmung mit dem ersten Geschwindigkeitsprofil kann auch beim Erreichen eines Maximums der Pressstempelgeschwindigkeit festgestellt werden, wobei vorzugsweise das erste Geschwindigkeitsprofil einen Impuls darstellt. In diesem Fall wird das erste Geschwindigkeitsprofil als ein 2D-Profil der Pressstempelgeschwindigkeit aufgefasst, wobei eine Übereinstimmung zwischen dem erfassten Geschwindigkeitsprofil und dem gespeicherten, ersten Geschwindigkeitsprofil als eine Ähnlichkeit der Profile definiert ist.

Gemäß einer Ausführungsform kann eine, insbesondere konstante, Kraft von vorzugsweise etwa 250 N auf den Pressstempel aufgebracht werden, zum Pressen des Dentalmaterials in den Formraum. Das Aufbringen der Kraft auf den Pressstempel kann während des Erwärmens der Brennkammer mit eingebauten Formeinsatz starten (siehe auch obige Ausführungen zur Überschneidung der Schritte b), c) des Verfahrens). Das Aufbringen der Kraft kann den Beginn des ersten Prozessabschnitts markieren, wobei das Aufbringen der Kraft während des zweiten Prozessabschnitts fortgesetzt wird. Der zweite Prozessabschnitt kann beendet werden, indem das Aufbringen der Kraft auf den Pressstempel eingestellt wird.

Der zweite Prozessabschnitt kann mit den folgenden Abschlusskriterien beendet werden,
i) wenn eine Übereinstimmung des erfassten Geschwindigkeitsprofils mit einem zweiten Geschwindigkeitsprofil festgestellt wird, oder
ii) nach Ablauf einer Zeit, welche einer maximalen Dauer des zweiten Prozessabschnitts entspricht, oder
iii) wenn die Pressstempelwegstrecke einen Schwellwert überschreitet.

### Zu i):

Die Abweichung der Pressstempelgeschwindigkeit von einem vorgegebenen Profil wird erfasst, wobei es sich versteht, dass grundsätzlich unterschiedliche Muffeln unterschiedliche Geschwindigkeitsprofile zeigen. Stets sind jedoch bei Formeinsätzen Presskanälte vorgesehen, an die sich Hohlräume anschließen, die für die Ausbildung der Dentalobjekte oder Dentalrestaurationsteile vorgesehen sind. Beim Eindringen des Dentalmaterials in die Presskanäle oder Formraum sinkt typischerweise die Eindringgeschwindigkeit, nachdem dort die Reibung recht hoch ist und zunimmt, je länger die wirksame Reibungsfläche zwischen dem keramischen Dentalmaterial und der Kanalwand ist. Sobald die Front der Einbettmasse den Hohlraum erreicht hat, nimmt die Reibung jedoch nicht oder nicht wesentlich weiter zu; dies entspricht dementsprechend einem Gleichbleiben der Eindringgeschwindigkeit, bis der Hohlraum gefüllt ist.

Auch wenn die Länge der Presskanäle, die auch als Annahmekanäle bezeichnet werden und die Größe der Hohlräume von Muffel zu Muffel unterschiedlich sind, besteht doch stets dieses prinzipielle Eindringgeschwindigkeitsprofil, an das sich in einem zweiten Prozessabschnitt eine Reduktion der Eindringgeschwindigkeit anschließt, wobei eine Verdichtung des Dentalmaterials erfolgt.

Vorteilhafterweise wird nun festgestellt, wenn die Eindringgeschwindigkeit von diesem prinzipiellen Verlauf abweicht, nämlich sich stärker erhöht, als es dem ersten Geschwindigkeitsprofil entspricht, dann kann das bedeuten, dass sich zu diesem Zeitpunkt ein weiterer Hohlraum eröffnet, typischerweise wenn die Muffel platzt. Diese Situation kann erkannt werden, wenn eine Übereinstimmung des erfassten Geschwindigkeitsprofils mit einem zweiten Geschwindigkeitsprofil festgestellt wird, beispielsweise wenn ein Überschreiten eines Schwellwerts durch die Pressstempelgeschwindigkeit oder durch die Pressstempelbeschleunigung festgestellt wird. Falls in dieser Situation das Aufbringen der Kraft auf den Pressstempel gestoppt wird, dann kann das Dentalrestaurationsteil verwenden werden, mindestens dann, wenn der Pressvorgang relativ weit fortgeschritten ist.

Falls im Verlauf des Pressens, der Bewegung des Pressstempels und der damit verbundenen fortschreitenden Bewegung des Dentalmaterials kein weiterer Hohlraum eröffnet wird, typischerweise, weil die Muffel nicht platzt, dann fällt die Pressstempelgeschwindigkeit. Diese kann zwar bis auf null fallen, jedoch ist es bevorzugt, das Pressen vorher abzubrechen, da die Pressstempelgeschwindigkeit auch dann einen Restwert größer als null haben kann, wenn der Formraum durch das Dentalmaterial bereits vollständig ausgefüllt ist. Das ist dadurch bedingt, dass das Dentalmaterial in dieser Phase zwar nicht mehr weiter fortschreiten kann, es wird jedoch durch den Pressdruck komprimiert und dringt gegebenenfalls in mikroskopischem Maßstab in die Muffel ein, oder die Muffel dehnt sich ganz leicht, so dass der Pressstempel weiter bewegt und eine Pressstempelgeschwindigkeit >0 festgestellt wird.

Folglich kann eine Übereinstimmung mit dem zweiten Geschwindigkeitsprofil beim Unterschreiten eines Schwellwerts durch die Pressstempelgeschwindigkeit festgestellt werden. Die Höhe des Schwellwerts kann experimentell oder mittels Computersimulationen ermittelt werden.

### Zu ii):

Diese Option ist am einfachsten umzusetzen. Die Zeit, die einer maximalen Dauer des zweiten Prozessabschnitts entspricht, kann experimentell oder mittels Computersimulationen ermittelt werden.

### Zu iii):

Nachdem die geometrischen Abmessungen von Vorpressraum, Presskanäle und Formraum, sowie das Volumen des verwendeten Dentalmaterials bekannt sind, kann mittels der zurückgelegten Pressstempelwegstrecke ermittelt werden, welcher Anteil des Formraums mit Dentalmaterial bereits ausgefüllt ist. Erreicht die Pressstempelwegstrecke einen Schwellwert, der, in Verbindung mit der Querschnittsfläche des Vorpressraums, dem Volumen des zu verwendenden Dentalmaterials entspricht, dann bedeutet das, dass der Formraum mit Dentalmaterial ausgefüllt ist. Der Pressvorgang kann abgebrochen werden, so dass der zweite Prozessabschnitt mit den Pressen beendet werden sollte.

Weitere Vorteile, Einzelheiten und Merkmale der Erfindung ergeben sich aus den nachfolgenden Ausführungsbeispielen unter Bezugnahme auf die Zeichnungen. Dabei verweisen gleiche Bezugszeichen auf gleiche oder entsprechende Elemente und Merkmale verschiedener Ausführungsbeispiele können miteinander kombiniert werden.

Es zeigen:
- Fig. 1: einen teilweisen Schnitt durch einen erfindungsgemäßen Pressofen unter Darstellung der Muffel in Schnittansicht; und
- Fig. 2: eine Darstellung eines erfindungsgemäßen Profils der Pressstempelgeschwindigkeit, aufgetragen über die Zeit.

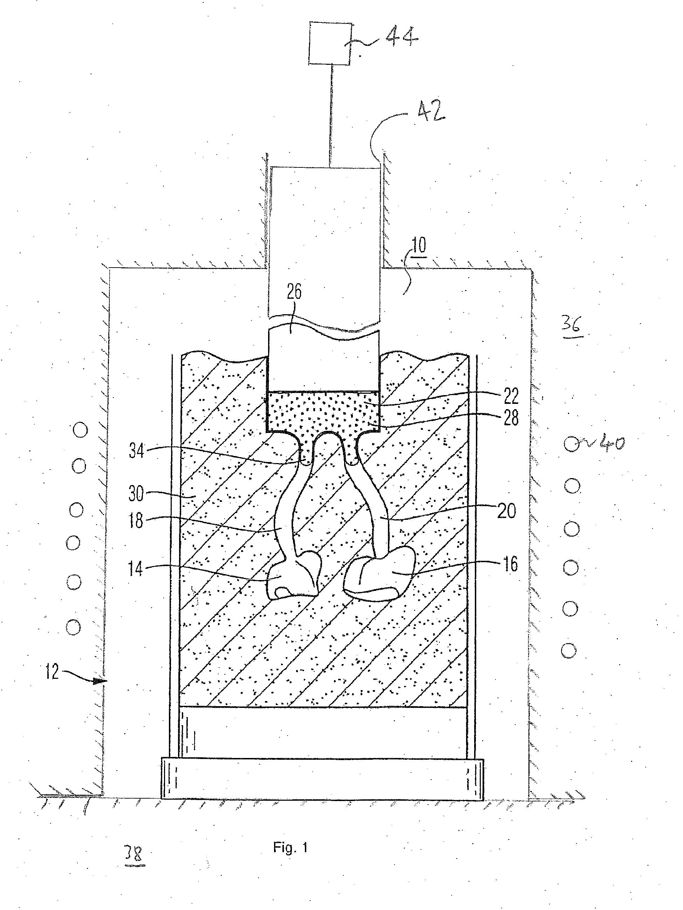

Der in Fig. 1 partiell dargestellte Pressofen ist für das Einstellen einer Muffel 12 in eine Brennkammer 10 des Pressofens bestimmt.

Die Muffel 12 befindet sich in der Brennkammer 10. Sie weist Hohlräume 14 und 16 auf, die für die Ausbildung von Dentalrestaurationsteilen als verlorene Formen bestimmt sind. Die Hohlräume 14, 16 sind über Presskanäle 18, 20 mit einem Vorpressraum 22 verbunden, der im Wesentlichen zylindrisch ausgebildet ist. In dem Vorpressraum 22 ist ein Pressstempel 26 schiebebeweglich gelagert. Der Pressstempel 26 drückt auf einen Rohling 28 aus Dentalmaterial 28, der sich in dem in Fig. 1 dargestellten Zustand bereits teilweise in die Presskanäle 18 und 20 hineinerstreckt.

Das Material der Muffel 12 besteht aus einer harten und temperaturfesten Gipsmischung 30. Auch bei Druck durch die Presskraft des Pressstempels 26 bleibt die Form der Hohlräume 14, 16 erhalten, so dass das Dentalrestaurationsteile sich mit der gewünschten Präzision herstellen lässt.

Die Hohlräume 14, 16 werden mit relativ großer Presskraft - und damit einsprechend hoher Pressstempelgeschwindigkeit - befüllt. Über die erfindungsgemäße Regelung ist gewährleistet, dass dennoch qualitativ gute Dentalrestaurationsteile erzeugbar sind. Hierbei ist besonders vorteilhaft, dass bei einer geringen Verweildauer des heißen Dentalmaterials 28 in der Muffel 12 die Neigung zu Reaktionen zwischen dem Dentalmaterial 28 und der Einbettmasse gering ist.

Wie aus Fig. 1 ersichtlich ist, ist die Brennkammer 10 zwischen einer Ofenhaube 36 und einem Ofenunterteil 38 ausgebildet. Die Ofenhaube 36 trägt in an sich bekannter Weise ein Heizelement 40, das die Brennkammer 10 spiralig umgibt. Der Pressstempel 26 ist in der Ofenhaube 36 in einer Pressstempelführung 42 geführt und mit einem Pressstempelantrieb 44 versehen, der zugleich auch einen Positionssensor aufweist, der die exakte Position - und damit auch die Bewegung des Pressstempels - erfasst.

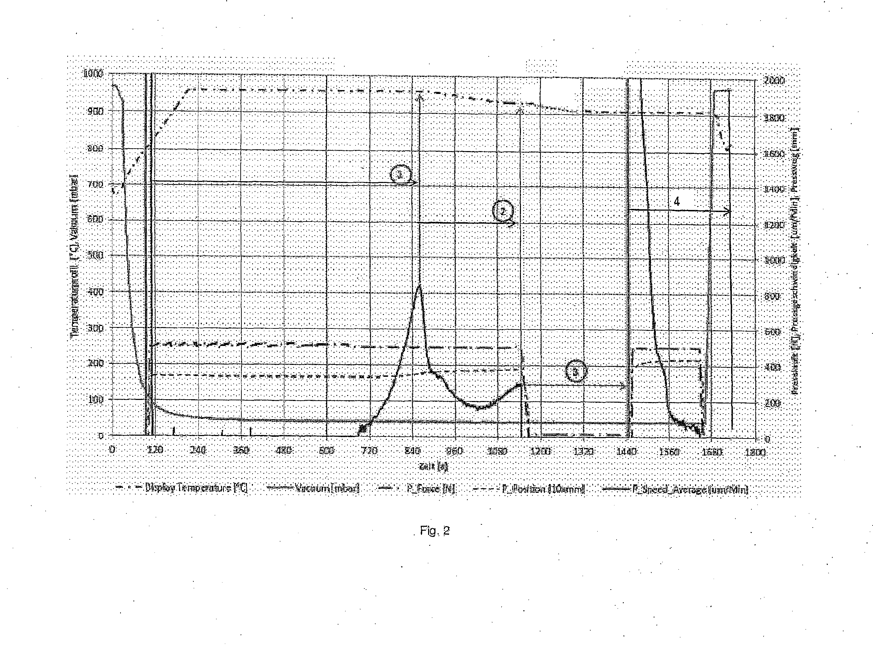

Die Fig. 2 zeigt, wie sich die Prozessparameter während eines Presszyklus entwickeln. Hierbei handelt es um die Prozessparameter:
- Temperatur in der Brennkammer 10 des Pressofens ("Display Temperature [°C]"), Anfangswert= Bereitschaftstemperatur;
- Druck in der Brennkammer 10 des Pressofens ("Vacuum [mbar]"), Anfangswert= etwa 1 bar;
- Kraft auf den Pressstempel 26 ("P_Force [N]"), Anfangswert= 0;
- Pressstempelwegstrecke ("P_Position [10xmm]"), Anfangswert= 0;
- Pressstempelgeschwindigkeit ("P-Speed_Average [µm/Min]"), Anfangswert= 0.
Hierbei ist ein Anfangswert der Wert eines Prozessparameters zu Beginn des Presszyklus.

Die nachfolgende Aufstellung zeigt tabellarisch den Verlauf der Ereignisse und der Prozessparameter im Zusammenhang mit den dazugehörenden Prozessabschnitten.

| Zeit [s] | Ereignisse |
|---|---|
| 0 | Der Presszyklus wird gestartet, das Dentalmaterial 28 wird in den Vorpressraum 22 eingebracht. |
| | Die Erwärmung der Brennkammer 10 auf die erste Temperatur wird gestartet und wird mit einer ersten Temperaturänderungsrate durchgeführt. |
| | Die Absenkung des Drucks in der Brennkammer 10 wird gestartet. |
| 100 | Der erste Prozessabschnitt wird gestartet. |
| | Eine konstante Kraft von etwa 250 N wird auf den Pressstempel 26 aufgebracht, zum Pressen des Dentalmaterials 28 in den Formraum 14, 16, wobei der Pressstempel 26 bewegt werden kann und die Pressstempelgeschwindigkeit in Abhängigkeit von der Zeit als ein Geschwindigkeitsprofil erfasst wird. |
| | Diese Pressstempelgeschwindigkeit ist zunächst weiterhin = 0. |
| | Eine von dem Pressstempel 26 zurückgelegte Pressstempelwegstrecke wird erfasst. Diese ist weiterhin = 0. |
| 200 | Der Druck in der Brennkammer 10, der im weiteren Verlauf des Presszyklus konstant bleibt, erreicht einen Endwert von etwa 70 mbar. |
| 230 | Die erste Temperatur wird in der Brennkammer 10 erreicht. Ab diesem Zeitpunkt, bis zum Ende des ersten Prozessabschnitts, bleibt die Temperatur in der Brennkammer 10 unverändert auf dem Wert der ersten Temperatur. |
| 700 | Das Dentalmaterial 28 fängt an, in den Randbereichen, die in Kontakt mit dem heißen Formeinsatz 30 stehen, zu schmelzen, wodurch das Dentalmaterial 28, und damit auch der Pressstempel 26 anfangen, sich fortzubewegen. Folglich beginnt die Pressstempelgeschwindigkeit anzusteigen. |
| | Die Position des Pressstempels 26 ändert sich, und die aufgebrachte Presskraft würde sinken, wenn diese nicht geregelt wäre. Erfindungsgemäß wird jedoch insofern eine Regelung vorgenommen. |
| 850 | Das Geschwindigkeitsprofil des Pressstempels 26, dargestellt als ein 2D-Profil der Pressstempelgeschwindigkeit ist, erreicht ein Maximum. |
| | Auf Basis des Maximums der Pressstempelgeschwindigkeit wird eine Übereinstimmung des erfassten Geschwindigkeitsprofils mit einem ersten Geschwindigkeitsprofil, das einen Impuls darstellt, festgestellt. Vorliegend werden die Profile auf Basis einer Ähnlichkeit der Profile als übereinstimmend angesehen. Die Übereinstimmung wird beim Erreichen des Maximums der Pressstempelgeschwindigkeit festgestellt. |
| | Das Feststellen des Maximums der Pressstempelgeschwindigkeit beendet den ersten Prozessabschnitt. |
| | Ab dem Zeitpunkt des Maximums, an weichen das Dentalmaterial 28 den Boden des Formraums 14, 16 erreicht hat, fängt das Dentalmaterial 28 an, sich im Formraum 14, 16 seitlich auszubreiten; das bremst die Vorwärtsbewegung ab. Folglich nimmt die Pressstempelgeschwindigkeit ab. Auf Basis der Annahme, dass zu diesem Zeitpunkt das Dentalmaterial 28 die gewünschte Temperatur erreicht hat, wird eine Absenkung der Temperatur in der Brennkammer 10 auf die zweite Temperatur gestartet, um eine weitere Erhöhung der Temperatur des Dentalmaterials 28 zu verringern. |
| | Der zweite Prozessabschnitt wird gestartet. |
| | Es erfolgt jedoch insofern keine spezielle Überwachung. |
| 1040 | Das Geschwindigkeitsprofil des Pressstempels 26 erreicht ein Minimum. Ab diesem Zeitpunkt steigt die Pressstempelgeschwindigkeit an. Das kann einen Hinweis darauf darstellen, dass ein weiterer Hohlraum eröffnet wird. |
| 1150 | Die Pressstempelgeschwindigkeit ist weiter angestiegen und jetzt ist es klar, dass die Temperatur am Rohling für die Verpressung ausreichend ist. |
| | Die Kraft auf den Pressstempel 26 wird auf null zurückgefahren. Infolgedessen fällt die Pressstempelgeschwindigkeit ebenfalls auf null. |
| | Die Brennkammer 10 wird weiter abgekühlt, in Richtung auf eine dritte Temperatur hin, mit einer dritten Temperaturänderungsrate. |
| | Dies bedeutet, dass keine weitere Temperaturerhöhung notwendig ist. |
| | Der dritte Prozessabschnitt wird gestartet. |
| 1440 | Der dritte Prozessabschnitt wird beendet, nach Ablauf einer vorab festgelegten Dauer des dritten Prozessabschnitts. |
| | Die insofern vorgesehene Wartezeit dient der ausreichenden Temperierung und Temperaturvergleichmäßigung über alle Bereiche in der Muffel. |
| | Der vierte Prozessabschnitt wird gestartet, was einhergeht mit folgenden Prozessparameter-Änderungen: |
| | Die konstante Kraft von etwa 250 N wird erneut auf den Pressstempel 26 aufgebracht. Die Pressstempelgeschwindigkeit erhöht sich, fällt jedoch nach kurzer Zeit wieder zurück, sobald der Pressstempel mit dem Kolben bzw. Rohling Kontakt hat. |
| | Die Temperatur in der Brennkammer 10 bleibt unverändert auf Höhe der dritten Temperatur. |
| 1670 | Die Pressstempelgeschwindigkeit fällt auf null, was darauf hinweist, dass der Formraum 14, 16 mit Dentalmetarial vollständig ausgefüllt ist. |
| | Die Brennkammer 10 wird abgekühlt, die Kraft auf den Pressstempel 26 wird auf null zurückgefahren. Infolgedessen wird die Pressstempelgeschwindigkeit negativ. |
| | Der dritte Prozessabschnitt wird beendet. |
| | Der Presszyklus wird beendet. |

Nachfolgend sind die Eckwerte und Schwellwerte des in Fig. 2 gezeigten Brennzyklus zusammengefasst.

| | |
|---|---|
| Bereitschaftstemperatur | 700 °C |
| erste Temperatur | 960 °C |
| Temperaturänderungsrate zum Aufwärmen der Brennkammer (10) auf die erste Temperatur | 80 °C/min |
| zweite Temperatur | 930 °C |
| Temperaturänderungsrate zum Abkühlen der Brennkammer (10) auf die zweite Temperatur | -8 °C/min |
| dritte Temperatur | 910 °C |
| Temperaturänderungsrate zum Abkühlen der Brennkammer (10) auf die dritte Temperatur | -8 °C/min |
| maximale Dauer des dritten Prozessabschnitts | 1:30 min |
| maximale Dauer des vierten Prozessabschnitts | 5 min |
| Kraft auf den Pressstempel (26) | 250 N |
| Schwellwerts der Pressstempelgeschwindigkeit im zweiten Geschwindigkeitsprofil | 180 µm/min |

Alle Eckwerte oder Schwellwerte der Prozessparameter, wie beispielsweise die Bereitschaftstemperatur, erste bis dritte Temperatur, Temperaturänderungsraten, Kraft auf den Pressstempel 26, oder Schwellwerte der Pressstempelgeschwindigkeit, Pressstempelbeschleunigung, Pressstempelwegstrecke, etc. sind an dem Pressofen von einer Bedienperson einstellbar.

Die zu erfassenden Prozessgrößen werden mittels Sensoren erfasst, die dazugehörenden analogen Signale werden in digitale Signale umgewandelt und von einem Mikroprozessor verarbeitet. So wird beispielsweise die Pressstempelwegstrecke an aufeinanderfolgenden Zeitpunkten gemessen, und aus der so ermittelten Zeitreihe wird mittels numerischer Differentiation die Pressstempelgeschwindigkeit und Pressstempelbeschleunigung ermittelt.

Anstelle der Erfassung der Geschwindigkeit ist es auch möglich, den Weg zu erfassen, und die so erfasste analogen Wegsignale zu verwenden.

## Patentansprüche

1. Verfahren zum Verarbeiten, insbesondere Pressen, eines Dentalmaterials (28) mittels
- eines Formeinsatzes (30) insbesondere einer Muffel, der einen Vorpressraum (22) aufweist, an welchen sich ein Formraum (14, 16) anschließt, wobei der Vorpressraum (22) zum Aufnehmen des Dentalmaterials (28) in der Form eines Rohlngs ausgebildet ist, und
- eines Pressofens mit einer Brennkammer (10) zum Aufnehmen des Formeinsatzes (30),
wobei das Verfahren die Schritte aufweist:
- Einbringen des Dentalmaterials (28) in den Vorpressraum (22);
- Erwärmen der Brennkammer (10), in welcher sich der Formeinsatz (30) befindet, auf eine erste Temperatur;
- Pressen des Dentalmaterials (28) mit einem Pressstempel (26) in den Formraum (14, 16) mittels Aufbringen einer Kraft auf den Pressstempel (26), in einem ersten Prozessabschnitt, wobei der Pressstempel (26) bewegt wird und die Pressstempelgeschwindigkeit in Abhängigkeit von der Zeit als ein Geschwindigkeitsprofil erfasst wird; und
- Einstellen, insbesondere Abkühlen, der Brennkammer (10) auf eine zweite Temperatur, in einem zweiten Prozessabschnitt, ab einem Zeitpunkt, an dem eine Übereinstimmung des erfassten Geschwindigkeitsprofils mit einem ersten Geschwindigkeitsprofil festgestellt wird, ohne dass die auf den Pressstempel (26) aufgebrachte Kraft verringert wird.

2. Verfahren nach Anspruch 1, **gekennzeichnet durch** mindestens einen der folgenden Schritte:
- eine Übereinstimmung mit dem ersten Geschwindigkeitsprofil wird festgestellt beim Überschreiten eines Schwellwerts **durch** die Pressstempelgeschwindigkeit;
- eine Übereinstimmung mit dem ersten Geschwindigkeitsprofil wird festgestellt beim Erreichen eines Maximums der Pressstempelgeschwindigkeit, wobei vorzugsweise das erste Geschwindigkeitsprofil einen Impuls darstellt;
- eine Übereinstimmung mit dem ersten Geschwindigkeitsprofil wird dann festgestellt, wenn eine Pressstempelbeschleunigung einen Schwellwert überschreitet;
- ein Aufintegrieren der Pressstempelgeschwindigkeit, die insbesondere von einem Positionserfassungssensor, der die Bewegung des Pressstempels über die Zeit erfasst wird;
- eine Erfassung der Wegstrecke des Wegs, dass das Dentalmaterial und damit der Pressstempel zurücklegt, über den Wegerfassungssensor.

3. Verfahren nach einem der vorhergehenden Ansprüche, **gekennzeichnet durch** mindestens einen der folgenden Schritte:
- die Brennkammer (10) wird auf die erste Temperatur mit einer ersten Temperaturänderungsrate erwärmt;
- die Brennkammer (10) wird auf die erste Temperatur ausgehend von einer Bereitschaftstemperatur erwärmt;
- die Brennkammer (10) wird auf die zweite Temperatur mit einer zweiten Temperaturänderungsrate abgekühlt;
- die Brennkammer (10) wird um eine Temperatur von maximal 15% der ersten Temperatur, vorzugsweise um etwa 5% der ersten Temperatur, auf die zweite Temperatur abgekühlt;
- eine von dem Pressstempel (26) zurückgelegte Pressstempelwegstrecke wird erfasst;
- eine, insbesondere während des ersten Prozessabschnitts oder während der ersten zwei Prozessabschnitte etwa konstante, Kraft von vorzugsweise etwa 250 N wird auf den Pressstempel (26) aufgebracht, zum Pressen des Dentalmaterials (28) in den Formraum (14, 16);
- das Aufbringen der Kraft auf den Pressstempel (26) startet während des Erwärmens der Brennkammer (10), zu Beginn des ersten Prozessabschnitts.

4. Verfahren nach einem der vorhergehenden Ansprüche, **gekennzeichnet durch** mindestens einen der folgenden Schritte:
- der zweite Prozessabschnitt wird beendet, indem das Aufbringen der Kraft auf den Pressstempel (26) eingestellt wird;
- Der zweite Prozessabschnitt wird beendet, indem die Vorwärtsbewegung des Presstempels richtung Pressen verlangsamt oder eingestellt wird;
- der zweite Prozessabschnitt wird dann beendet, i) wenn eine Übereinstimmung des erfassten Geschwindigkeitsprofils mit einem zweiten Geschwindigkeitsprofil festgestellt wird, oder ii) nach Ablauf einer Zeit, welche einer maximalen Dauer des zweiten Prozessabschnitts entspricht, oder iii) wenn die Pressstempelwegstrecke einen Schwellwert überschreitet.

5. Verfahren nach einem der vorhergehenden Ansprüche, **gekennzeichnet durch** mindestens einen der folgenden Schritte:
- eine Übereinstimmung mit dem zweiten Geschwindigkeitsprofil wird beim Überschreiten eines Schwellwerts **durch** die Pressstempelgeschwindigkeit festgestellt;
- eine Übereinstimmung mit dem zweiten Geschwindigkeitsprofil wird dann festgestellt, wenn eine Pressstempelbeschleunigung einen Schwellwert überschreitet;
- eine Übereinstimmung mit dem zweiten Geschwindigkeitsprofil wird beim Unterschreiten eines Schwellwerts **durch** die Pressstempelgeschwindigkeit festgestellt.

6. Verfahren nach einem der vorhergehenden Ansprüche, **gekennzeichnet durch** mindestens einen der folgenden Schritte:
- wenn am Ende des zweiten Prozessabschnitts eine Übereinstimmung des erfassten Geschwindigkeitsprofils mit einem zweiten Geschwindigkeitsprofil festgestellt wird und zugleich die Pressstempelwegstrecke einen Schwellwert unterschreitet, dann i) wird in einem dritten Prozessabschnitt das Aufbringen der Kraft auf den Pressstempel (26) während einer Dauer des dritten Prozessabschnitts ausgesetzt und anschließend ii) wird in einem vierten Prozessabschnitt die Kraft auf den Pressstempel (26) erneut aufgebracht;
- der vierte Prozessabschnitt wird beendet, i) nach Ablauf einer Zeit, welche einer maximalen Dauer des vierten Prozessabschnitts entspricht, oder ii) wenn die Pressstempelwegstrecke einen Schwellwert überschreitet;
- in dem dritten Prozessabschnitt wird die Brennkammer (10), ausgehend von der zweiten Temperatur, auf eine dritte Temperatur abgekühlt;
- in dem vierten Prozessabschnitt wird die Brennkammer (10) auf einem konstanten Temperaturwert gehalten.

7. Verfahren nach einem der vorhergehenden Ansprüche, **gekennzeichnet durch** mindestens einen der folgenden Schritte:
- die Bereitschaftstemperatur wird auf einen Wert von 300 bis 1000 °C, vorzugsweise etwa 700 °C, eingestellt;
- die erste Temperatur wird auf einen Wert von 700 bis 1200 °C, vorzugsweise etwa 960 °C, eingestellt;
- die Temperaturänderungsrate zum Aufwärmen der Brennkammer (10) auf die erste Temperatur wird auf einen Wert von 50 bis 110 °C/min, vorzugsweise etwa 80 °C/min, eingestellt;
- die zweite Temperatur wird auf einen Wert von 700 bis 1100 °C, vorzugsweise etwa 930 °C, eingestellt;
- die Temperaturänderungsrate zum Abkühlen der Brennkammer (10) auf die zweite Temperatur wird auf einen Wert von 1 bis -15 °C/min, vorzugsweise etwa -8 °C/min, eingestellt;
- die dritte Temperatur wird auf einen Wert von 700 bis 1100 °C, vorzugsweise etwa 910 °C, eingestellt;
- die Temperaturänderungsrate zum Abkühlen der Brennkammer (10) auf die dritte Temperatur wird auf einen Wert von -5 bis -15 °C/min, vorzugsweise etwa -8 °C/min, eingestellt;
- die maximale Dauer des vierten Prozessabschnitts wird auf einen Wert von 3 bis 7 min, vorzugsweise etwa 5 min, eingestellt;
- die Kraft auf den Pressstempel (26) wird auf einen Wert von 200 bis 400 N, vorzugsweise etwa 250 N, eingestellt.

8. Dentalofen, insbesondere einen Pressofen mit einer Regeleinrichtung, welche dazu ausgebildet ist, Parameter des Dentalofens einschließlich Temperatur, Kraft auf einen Pressstempel (26) und Parameter der Pressstempelbewegung, gemäß einem Verfahren nach einem der vorhergehenden Ansprüche, zu regeln.

## Geänderte Patentansprüche

### Geänderte Patentansprüche gemäss Regel 137(2) EPÜ.

1. Verfahren zum Verarbeiten, insbesondere Pressen, eines Dentalmaterials (28) mittels
- eines Formeinsatzes (30) insbesondere einer Muffel, der einen Vorpressraum (22) aufweist, an welchen sich ein Formraum (14, 16) anschließt, wobei der Vorpressraum (22) zum Aufnehmen des Dentalmaterials (28) in der Form eines Rohlings ausgebildet ist, und
- eines Pressofens mit einer Brennkammer (10) zum Aufnehmen des Formeinsatzes (30),
wobei das Verfahren die Schritte aufweist:
- Einbringen des Dentalmaterials (28) in den Vorpressraum (22);
- Erwärmen der Brennkammer (10), in welcher sich der Formeinsatz (30) befindet, auf eine erste Temperatur;
- Pressen des Dentalmaterials (28) mit einem Pressstempel (26) in den Formraum (14, 16) mittels Aufbringen einer Kraft auf den Pressstempel (26), in einem ersten Prozessabschnitt, wobei der Pressstempel (26) bewegt wird und die Pressstempelgeschwindigkeit in Abhängigkeit von der Zeit als ein Geschwindigkeitsprofil erfasst wird; und
- Einstellen, insbesondere Abkühlen, der Brennkammer (10) auf eine zweite Temperatur, in einem zweiten Prozessabschnitt, ab einem Zeitpunkt, an dem eine Übereinstimmung des erfassten Geschwindigkeitsprofils mit einem ersten gespeicherten Geschwindigkeitsprofil festgestellt wird, ohne dass die auf den Pressstempel (26) aufgebrachte Kraft verringert wird, wobei die Übereinstimmung als eine Ähnlichkeit der Profile definiert ist.

2. Verfahren nach Anspruch 1, **gekennzeichnet durch** mindestens einen der folgenden Schritte:
- eine Übereinstimmung mit dem ersten Geschwindigkeitsprofil wird festgestellt beim Überschreiten eines Schwellwerts **durch** die Pressstempelgeschwindigkeit;
- eine Übereinstimmung mit dem ersten Geschwindigkeitsprofil wird festgestellt beim Erreichen eines Maximums der Pressstempelgeschwindigkeit, wobei vorzugsweise das erste Geschwindigkeitsprofil einen Impuls darstellt;
- eine Übereinstimmung mit dem ersten Geschwindigkeitsprofil wird dann festgestellt, wenn eine Pressstempelbeschleunigung einen Schwellwert überschreitet;
- ein Aufintegrieren der Pressstempelgeschwindigkeit, die insbesondere von einem Positionserfassungssensor, der die Bewegung des Pressstempels über die Zeit erfasst wird;
- eine Erfassung über einen Wegerfassungssensor der Wegstrecke des Wegs, dass das Dentalmaterial und damit der Pressstempel zurücklegt.

3. Verfahren nach einem der Ansprüche 1 oder 2, **dadurch gekennzeichnet, dass** die erste Temperatur im ersten Prozessabschnitt, indem das Pressen des Dentalmaterials (18) stattfindet, höher ist als die zweite Temperatur, die für die Verarbeitung des Dentalmaterials benötigt wird.

4. Verfahren nach einem der vorhergehenden Ansprüche, **gekennzeichnet durch** mindestens einen der folgenden Schritte:
- die Brennkammer (10) wird auf die erste Temperatur mit einer ersten Temperaturänderungsrate erwärmt;
- die Brennkammer (10) wird auf die erste Temperatur ausgehend von einer Bereitschaftstemperatur, die für die Bearbeitung des Dentalmaterials gewünscht und benötigt wird, erwärmt;
- die Brennkammer (10) wird auf die zweite Temperatur mit einer zweiten Temperaturänderungsrate abgekühlt;
- die Brennkammer (10) wird um eine Temperatur von maximal 15% der ersten Tem-peratur, vorzugsweise um etwa 5% der ersten Temperatur, auf die zweite Temperatur abgekühlt;
- eine von dem Pressstempel (26) zurückgelegte Pressstempelwegstrecke wird erfasst;
- eine, insbesondere während des ersten Prozessabschnitts oder während der ersten zwei Prozessabschnitte etwa konstante, Kraft von vorzugsweise etwa 250 N wird auf den Pressstempel (26) aufgebracht, zum Pressen des Dentalmaterials (28) in den Formraum (14, 16);
- das Aufbringen der Kraft auf den Pressstempel (26) startet während des Erwärmens der Brennkammer (10), zu Beginn des ersten Prozessabschnitts.

5. Verfahren nach einem der vorhergehenden Ansprüche, **gekennzeichnet durch** mindestens einen der folgenden Schritte:
- der zweite Prozessabschnitt wird beendet, indem das Aufbringen der Kraft auf den Pressstempel (26) eingestellt wird;
- Der zweite Prozessabschnitt wird beendet, indem die Vorwärtsbewegung des Presstempels richtung Pressen verlangsamt oder eingestellt wird;
- der zweite Prozessabschnitt wird dann beendet, i) wenn eine Übereinstimmung des erfassten Geschwindigkeitsprofils mit einem zweiten Geschwindigkeitsprofil festgestellt wird, oder ii) nach Ablauf einer Zeit, welche einer maximalen Dauer des zweiten Prozessabschnitts entspricht, oder iii) wenn die Pressstempelwegstrecke einen Schwellwert überschreitet.

6. Verfahren nach einem der vorhergehenden Ansprüche, **gekennzeichnet durch** mindestens einen der folgenden Schritte:
- eine Übereinstimmung mit dem zweiten Geschwindigkeitsprofil wird beim Überschreiten eines Schwellwerts **durch** die Pressstempelgeschwindigkeit festgestellt;
- eine Übereinstimmung mit dem zweiten Geschwindigkeitsprofil wird dann festgestellt, wenn eine Pressstempelbeschleunigung einen Schwellwert überschreitet;
- eine Übereinstimmung mit dem zweiten Geschwindigkeitsprofil wird beim Unterschreiten eines Schwellwerts **durch** die Pressstempelgeschwindigkeit festgestellt.

7. Verfahren nach einem der vorhergehenden Ansprüche, **gekennzeichnet durch** mindestens einen der folgenden Schritte:
- wenn am Ende des zweiten Prozessabschnitts eine Übereinstimmung des erfassten Geschwindigkeitsprofils mit einem zweiten Geschwindigkeitsprofil festgestellt wird und zugleich die Pressstempelwegstrecke einen Schwellwert unterschreitet, dann i) wird in einem dritten Prozessabschnitt das Aufbringen der Kraft auf den Pressstempel (26) während einer Dauer des dritten Prozessabschnitts ausgesetzt und anschließend ii) wird in einem vierten Prozessabschnitt die Kraft auf den Pressstempel (26) erneut aufgebracht;
- der vierte Prozessabschnitt wird beendet, i) nach Ablauf einer Zeit, welche einer maximalen Dauer des vierten Prozessabschnitts entspricht, oder ii) wenn die Pressstempelwegstrecke einen Schwellwert überschreitet;
- in dem dritten Prozessabschnitt wird die Brennkammer (10), ausgehend von der zweiten Temperatur, auf eine dritte Temperatur abgekühlt;
- in dem vierten Prozessabschnitt wird die Brennkammer (10) auf einem konstanten Temperaturwert gehalten.

8. Verfahren nach einem der vorhergehenden Ansprüche, **gekennzeichnet durch** mindestens einen der folgenden Schritte:
- die Bereitschaftstemperatur, die für die Verarbeitung des Dentalmaterials gewünscht und benötigt wird, wird auf einen Wert von 300 bis 1000 °C, vorzugsweise etwa 700 °C, eingestellt;
- die erste Temperatur wird auf einen Wert von 700 bis 1200 °C, vorzugsweise etwa 960 °C, eingestellt;
- die Temperaturänderungsrate zum Aufwärmen der Brennkammer (10) auf die erste Temperatur wird auf einen Wert von 50 bis 110 °C/min, vorzugsweise etwa 80 °C/min, eingestellt;
- die zweite Temperatur wird auf einen Wert von 700 bis 1100 °C, vorzugsweise etwa 930 °C, eingestellt;
- die Temperaturänderungsrate zum Abkühlen der Brennkammer (10) auf die zweite Temperatur wird auf einen Wert von 1 bis -15 °C/min, vorzugsweise etwa -8 °C/min, eingestellt;
- die dritte Temperatur wird auf einen Wert von 700 bis 1100 °C, vorzugsweise etwa 910 °C, eingestellt;
- die Temperaturänderungsrate zum Abkühlen der Brennkammer (10) auf die dritte Temperatur wird auf einen Wert von -5 bis -15 °C/min, vorzugsweise etwa -8 °C/min, eingestellt;
- die maximale Dauer des vierten Prozessabschnitts wird auf einen Wert von 3 bis 7 min, vorzugsweise etwa 5 min, eingestellt;
- die Kraft auf den Pressstempel (26) wird auf einen Wert von 200 bis 400 N, vorzugsweise etwa 250 N, eingestellt.

9. Dentalofen, insbesondere einen Pressofen mit einer Regeleinrichtung, welche dazu ausgebildet ist, Parameter des Dentalofens einschließlich Temperatur, Kraft auf einen Pressstempel (26) und Parameter der Pressstempelbewegung, gemäß einem Verfahren nach einem der vorhergehenden Ansprüche, zu regeln.
